# EUROPEAN PATENT SPECIFICATION

(11) **EP 3 182 561 B1**
(45) Date of publication and mention of the grant of the patent: **09.01.2019**
(21) Application number: 16197034.8
(22) Date of filing: 03.11.2016
(51) Int. Cl.: H02K 7/02, H02K 21/26, H02K 21/14, H02K 7/20, H02K 21/12, H02K 21/28, H02K 7/108, H02K 53/00

(54) **ELECTRICITY GENERATION DEVICE WITH LOW POWER CONSUMPTION**
ELEKTRIZITÄTSERZEUGUNGSVORRICHTUNG MIT GERINGEM STROMVERBRAUCH
DISPOSITIF DE PRODUCTION D'ÉLECTRICITÉ À FAIBLE CONSOMMATION D'ÉNERGIE

(43) Date of publication of application: 21.06.2017
(73) Proprietor: Jie Neng Power Industry Co., Ltd., Kaohsiung City (TW)
(72) Inventor: TSAI, Chia-Nan, Kaohsiung City (TW)
(74) Representative: Viering, Jentschura & Partner mbB Patent- und Rechtsanwälte

(56) References cited:
- EP-A2- 1 793 480
- US-A1- 2002 121 817
- US-A1- 2007 001 460
- US-A1- 2010 283 266
- US-A1- 2011 031 827

## Description

### 1. Field of the Invention

The present invention relates to an electricity generation device, and more particularly to an electricity generation device with low power consumption that can be operated efficiently.

### 2. Description of Related Art

Regarding the current demand for global electricity supply, traditional means of power generation have shortcomings. For example, thermal power may cause pollution, and nuclear power is risky with disposal of the nuclear waste highly controversial. Therefore, current power generating devices emphasize on green power and environmental protection. However, the green power generation such as wind power generation or solar cell power generation would be influenced by the weather and therefore is unstable.

In addition, to reduce the emissions of exhaust gas by vehicles so as to avoid fuel combustion emissions causing air pollution and the global warming, the electric vehicles have become increasingly popular in advanced countries and widely accepted by the public.

However, the battery of the conventional electric vehicle is required to be charged for a long time and the charging stations are not widely deployed. Therefore, how to prolong the battery life and how to reduce the loading of the battery are the problems that the electric vehicles have to face.

A known electricity generation device with is known form EP 1 793 480 A2. The device comprises an operating module, a generator stator, a flywheel with an outer surface spaced from the generator stator, a generator rotor mounted around the outer peripheral surface and spaced from the generator stator and a transmission assembly, a connecting shaft and also a clutch mounted on the connecting shaft asa well as a first and a second motor.

To overcome the shortcomings of the conventional electricity generation device, the present invention provides an electricity generation device with low power consumption to mitigate or obviate the aforementioned problems.

The main objective of the present invention is to provide an electricity generation device with low power consumption that can be operated efficiently.

The electricity generation device with low power consumption according to claim 1 has an operating module, a first motor, and a second motor. Electricity is inputted to the first motor to actuate the first motor in a short time, the first motor drives a transmission assembly of the operating module to rotate, and the transmission assembly drives a flywheel of the operating module to rotate. A generator rotor is mounted around the flywheel, and a generator stator is mounted around an inner peripheral surface of the body. The second motor is driven by the transmission assembly. When the flywheel reaches a certain rotational speed, the second motor needs only a low current input for operation. That is, the second motor can be continuously operated, and the flywheel generates rotor power, thereby achieving the effect of low-power consumption.

Other objects, advantages, and novel features of the invention will become more apparent from the following detailed description when taken in conjunction with the accompanying drawing.

### IN THE DRAWINGS:

Fig. 1 is a perspective view of an electricity generation device with low power consumption in accordance with the present invention;
Fig. 2 is an exploded perspective view of the electricity generation device with low power consumption in Fig. 1;
Fig. 3 is a cross sectional side view of the electricity generation device with low power consumption in Fig. 1;
Fig. 4 is a block diagram of a first operating process of the electricity generation device with low power consumption in Fig. 1; and
Fig. 5 is a block diagram of a second operating process of the electricity generation device with low power consumption in Fig. 1.

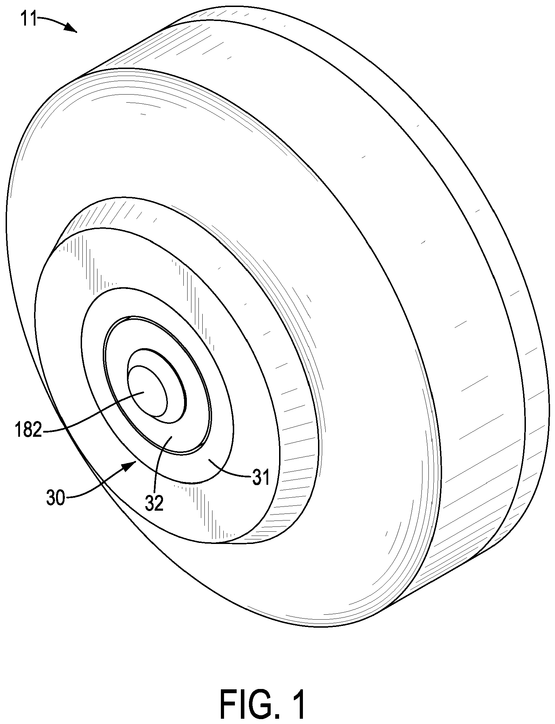

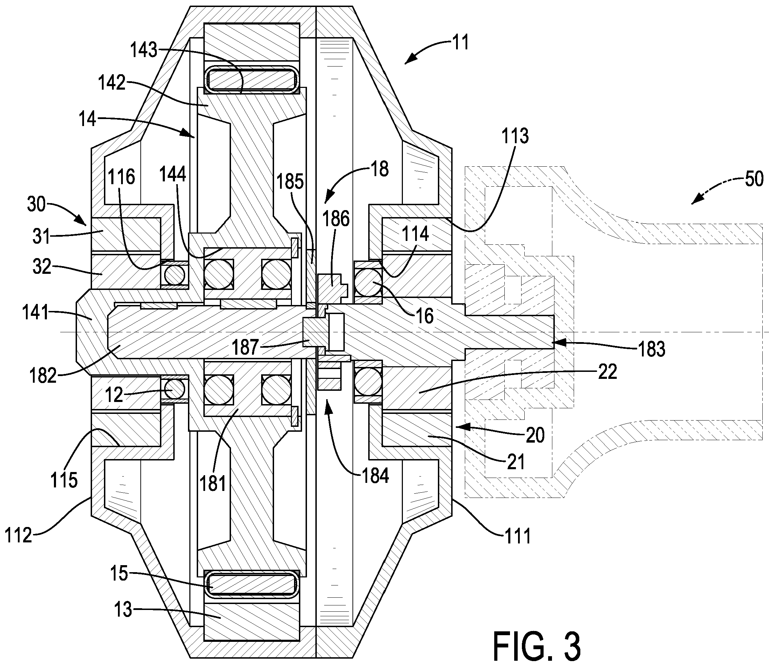

With reference to Figs. 1 to 3, an electricity generation device with low power consumption in accordance with the present invention comprises an operating module 10, a first motor 20, and a second motor 30.

The operating module 10 is installed in an electric vehicle and has a body 11, a first bearing 12, a generator stator 13, a flywheel 14, a generator rotor 15, a second bearing 16, and a transmission assembly 18. The body 11 may be a hollow disc-shaped housing or a hollow frame. When the body 11 is a hollow disc-shaped housing, the body 11 remains in a vacuum state after the generation device is assembled. The process of vacuuming the body 10 is a conventional technique, and detailed descriptions thereof are omitted. The body 11 has an inner circumferential surface, a first face 111, a second face 112, a first mounting recess 113, a first mounting hole 114, a second mounting recess 115, and a second mounting hole 116. The first mounting recess 113 is axially formed in the first face 111 of the body 11 and has an inner surface. The first mounting hole 114 is axially formed through the inner surface of the first mounting recess 113. The second mounting recess 115 is axially formed in the second face 112 of the body 11 and has an inner surface. The second mounting recess 115 is aligned with the first mounting recess 113. The second mounting hole 116 is axially formed through the inner surface of the second mounting recess 115. The second mounting hole 116 is aligned with the first mounting hole 114.

The first bearing 12 is mounted in the second mounting hole 116. The generator stator 13 is mounted on the inner circumferential surface of the body 11. The generator stator 13 may be a coil or a magnet. The flywheel 14 is located in the body 11. The flywheel 14 has an extension portion 141 and a disk 142. The extension portion 142 is mounted through the first bearing 12 and axially extends out of the second mounting recess 115. The extension portion 141 is a hollow tube. The disk 142 and the extension portion 141 are formed as one piece. The disk 142 is located in the body 11 and between the first mounting recess 113 and the second mounting recess 115. The disk 142 has an outer peripheral surface, an annular recess 143, and a through recess 144.The outer peripheral surface of the disk 142 is spaced from the generator stator 13. The annular recess 143 is radially formed in and around the outer peripheral surface of the disk 142. The through recess 144 is axially formed in a center of the disk 142, and the through recess 144 communicates with an interior of the extension portion 141.

The generator rotor 15 is mounted in the annular recess 143 of the disk 142 of the flywheel 14, and the generator rotor 15 is spaced from the generator stator 13. The generator rotor 15 may be a coil or a magnet. When the generator stator 13 is a coil, the generator rotor 15 is a magnet. When the generator stator 13 is a magnet, the generator rotor 15 is a coil. The generator rotor 15 is spaced from the generator stator 13. The second bearing 16 is mounted in the first mounting hole 114. The transmission assembly 18 is mounted in the through recess 144 of the flywheel 14 and is mounted through the second bearing 16. The transmission assembly 18 has a unidirectional bearing 181, a connecting shaft 182, a transmission shaft 183, and a clutch 184. The unidirectional bearing 181 is mounted in the through recess 144 of the flywheel 14, is located in the disk 142, and rotates with the flywheel 14 synchronously. The unidirectional bearing 181 is located between the first mounting recess 113 and the second mounting recess 115.

The connecting shaft 182 is mounted through the second mounting hole 116 and the unidirectional bearing 181, is mounted in the extension portion 141 of the flywheel 14, and rotates with the unidirectional bearing 181 and the flywheel 14 synchronously. The connecting shaft 182 has a first end and a second end. The first end of the connecting shaft 182 is mounted in the extension portion 141. The second end of the connecting shaft 182 extends out of the through recess 144 of the flywheel 14. The transmission shaft 183 is mounted through the second bearing 16, and the transmission shaft 183 is axially spaced from the connecting shaft 182. The transmission shaft 183 has a first end and a second end. The first end of the transmission shaft 183 is located in the body 11. The second end of the transmission shaft 183 extends out of the first mounting recess 113 of the body 11. The clutch 184 is mounted on the connecting shaft 182 and the transmission shaft 183. The clutch 184 has a first half portion 185, a second half portion 186, and an adjustment block 187. The first half portion 185 of the clutch 184 is mounted on and around the second end of the connecting shaft 182. The second half portion 186 of the clutch 184 is mounted on and around the first end of the transmission shaft 183. The adjustment block 187 of the clutch 184 is mounted on the first end of the transmission shaft 183, and the adjustment block 187 may move in the axial direction of the transmission shaft 183. When the adjustment block 187 moves toward the second face 112 of the body 11, the first half portion 185 and the second half portion 186 of the clutch 184 engages with each other. When the adjustment block 187 moves toward the first face 111 of the body 11, the first half portion 185 of the clutch 184 detaches from the second half portion 186 of the clutch 184. The clutch 184 may be an electromagnetic clutch, and the electromagnetic clutch controls the engagement and the separation of the clutch by energizing or de-energizing the coil.

The first motor 20 is mounted in the first mounting recess 113 of the body 11 of the operating module 10. The first motor 20 may be the driving motor of the electric vehicle, and the first motor 20 is a low speed and high torque motor. The first motor 20 may be a rotor motor and has an input stator 21 and an input rotor 22. The input stator 21 has an outer peripheral surface, and the outer peripheral surface of the input stator 21 is fixed on an inner peripheral surface of the first mounting recess 113 of the body 11. The input rotor 22 is mounted around and fixed with the transmission shaft 183 and rotates relative to the input stator 21. Therefore, the input rotor 22 of the first motor 20 may rotate with the transmission shaft 183 synchronously.

The second motor 30 is mounted in the second mounting recess 115 of the body 11 of the operating module 10. The second motor 30 is a high speed and low torque motor and may be a rotor motor. The second motor 30 has an output stator 31 and an output rotor 32. The output stator 31 has an outer peripheral surface, and the outer peripheral surface of the output stator 31 is fixed in the second mounting recess 115 of the body 11. The output rotor 32 may rotate relative to the output stator 31. The output rotor 32 of the second motor 30 is mounted around and fixed with the extension portion 141 of the flywheel 14, and the output rotor 32 of the second motor 30 may rotate with the flywheel 14 and the connecting shaft 182 synchronously.

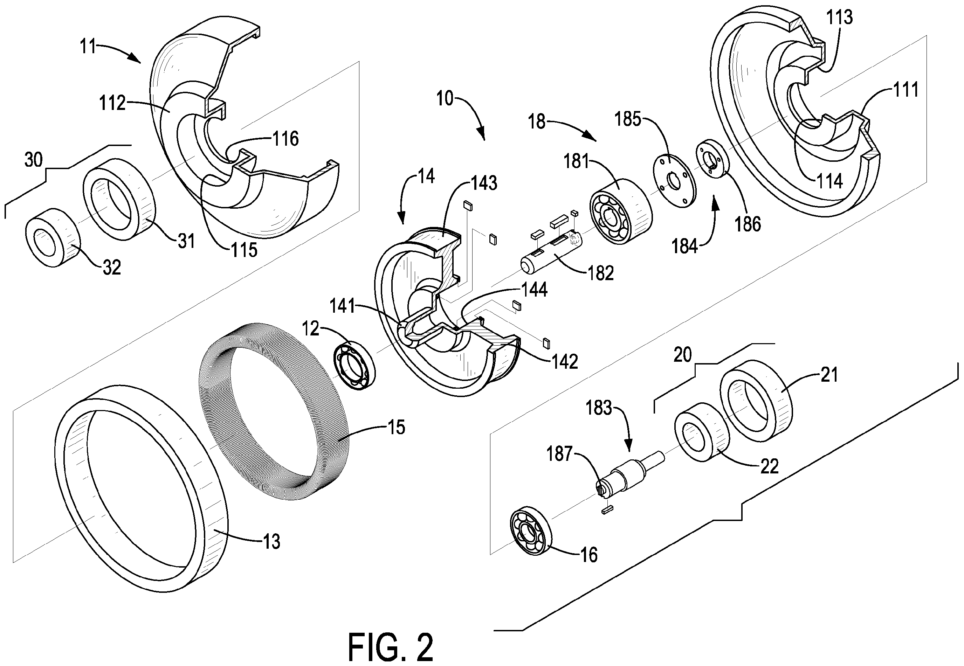

With reference to Figs. 2 to 4, when the first operational embodiment of the preferred embodiment of the present invention is in use, the first motor 20 is connected with the transmission shaft 183. Electricity is inputted to the first motor 20 to actuate the transmission shaft 183, from an idle state to start rotation, within a short time. Therefore, the first motor 20 consumes low energy. Suppose the power consumption of the first motor 20 is 50KW and operates for 30 seconds, and the input voltage of the first motor 20 is 480V. The input rotor 22 of the first motor 20 accelerates from 0 to 1800 rpm (revolutions per minute), and the consumption current of the first motor 20 is 78A(50KW×750wh÷ 480V=78A). Therefore, the consumption power of the first motor 20 is 312wh (watt hour) (78A×480V÷3600S×30S=312wh). At the same time, the adjustment block 187 moves toward the second face 112 of the body, and the first half portion 185 and the second half portion 186 of the clutch 184 are combined with each other, and the connecting shaft 182 rotates with the transmission shaft 183 synchronously via the combination of the clutch 184.

At the same time, as the unidirectional bearing 181 is mounted in the through recess 144 of the flywheel 14 and inside the disk 142, the unidirectional bearing 181 has the function of one direction rotation. Furthermore, the unidirectional bearing 181 has a force transmission effect, and may keep the flywheel 14 from rotating in reverse relative to the connecting shaft 182. The flywheel 14 may rotate with the connecting shaft 182 synchronously by the rotating inertia of the disk 142 of the flywheel 14. The extension portion 141 may drive the output rotor 32 of the second motor 30. For the second motor 30, the process of accelerating from 0 rpm to 1800 rpm does not consume any energy. Therefore, the power consumed by the start-up of the second motor 30 can be saved.

As the speed of the output rotor 32 of the second motor 30 reaches 1800 rpm, the electricity of the battery of the electric vehicle is inputted to the second motor 32, and this makes the output rotor 32 of the second motor 30 reaches 3600 rpm. At the same time, the adjustment block 187 moves toward the first face 111 of the body 11, and the first half portion 185 of the clutch 184 separates from the second half portion 186 of the clutch 184. Therefore, the connecting shaft 182 is separated from the transmission shaft 183. The second motor 30 is a constant speed motor with a power of 25 KW. The electricity consumption of the second motor 30 is 39A (25KW×750wh÷480V=39A), and the power consumption of the second motor 30 in an hour is 18720wh(39A× 480V=18720wh). The output rotor 32 of the second motor 30 drives the extension portion 141 of the flywheel 14 to rotate, and this makes the flywheel 14 continually rotate with the connecting shaft 182. The generator rotor 15 mounted around the disk 142 may rotate relative to the generator stator 13 of the operating module 10. Due to the electromagnetic excitation effect, the generator rotor 15 may generate electricity, and the generator rotor 15 and the generator stator 13 form a flywheel generator with power of 40KW, and the output voltage of the flywheel generator is 480V. Therefore, the output current of the flywheel generator is 63A (40KW×750wh÷480V=63A), and the output power of the generator rotor 15 and the generator stator 13 is 30240wh (63A× 480V=30240wh). The power consumption saved by this invention is about 11208wh (30240wh-312wh-18720wh=11208wh). The electricity of the generator rotor 15 and the generator stator 13 is transmitted to the first motor 20, and then the first motor 20 may drive a gearbox 50. The gearbox 50 is connected to the first motor 20 via the transmission shaft 183. If the generator rotor 15 and the generator stator 13 have extra electricity, the extra electricity would recharge the BMS (Battery Management Systems) of the electric vehicle. The electricity of the BMS may drive the second motor 30. Furthermore, the body 11 remains in the vacuum state, and the flywheel 14 has a low frictional energy loss during the operation and allows the flywheel 14 to operate smoothly.

According to the invention, the first motor 20 drives the connecting shaft 182 of the operating module 10 and the flywheel 14 to rotate relative to the body 11, and this makes the output rotor 32 of the second motor 30 rotate. The required energy of the second motor 30 can be saved from an idle status to rotation. And then electricity is continually input to the second motor 30 to increase the speed, and the flywheel 14 and the connecting shaft 182 may rotate relative to the body 11. The generator rotor 15 generates electric energy by electromagnetic induction and recharges the electric energy to the first motor 20, and stores the extra electric power to the battery for use in order to reduce the energy loss.

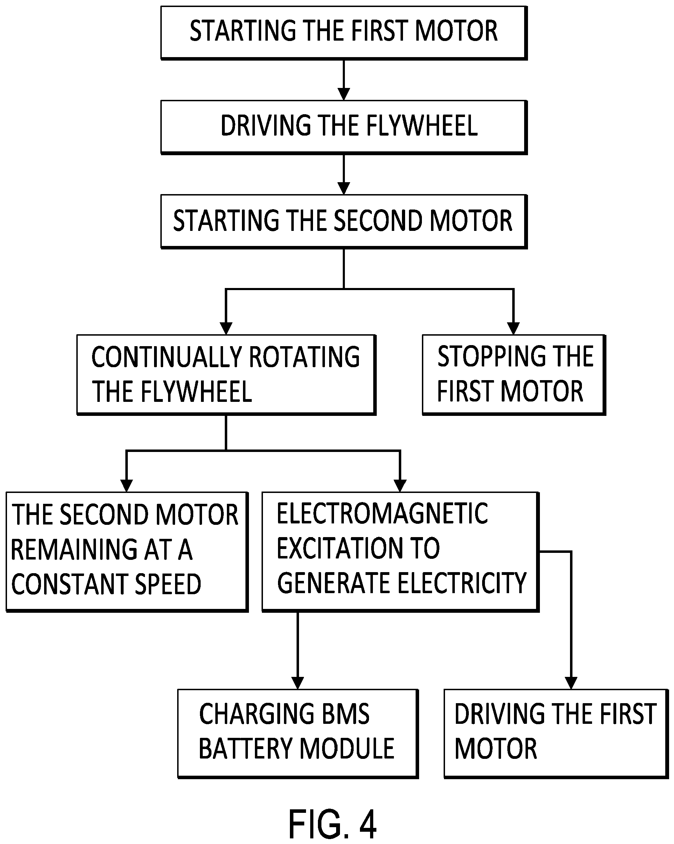

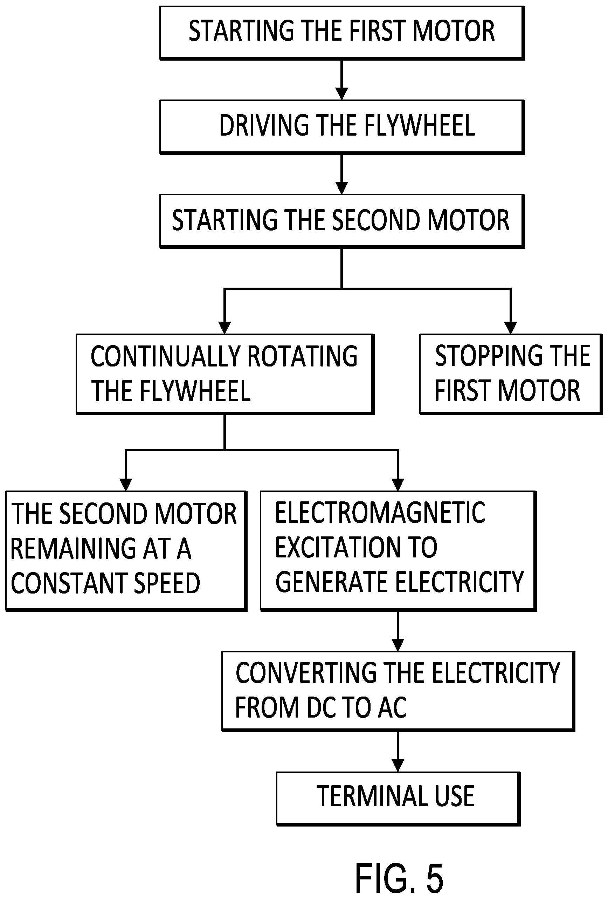

With reference to Fig. 5, when the second operational embodiment of the preferred embodiment of the present invention is in use, the operating process of the second embodiment is similar to the first operational embodiment as shown in Fig. 4 except that the direct current is converted into alternating current after the generator stator 13 and the generator rotor 15 generate electricity. The generated electric power would be transmitted to a terminal for use.

In conclusion, the first motor 20 drives the flywheel 14 to rotate relative to the body 11 and makes the output rotor 32 of the second motor 30 rotate. The energy of the starting process of the second motor 30 can be saved, the generator stator 13 and the generator rotor 15 generate electricity, and the electricity may recharge the first motor 20 or be transmitted to a terminal for use.

## Claims

1. An electricity generation device, **characterized in that** the electricity generation device comprises :
an operating module (10) having;
a body (11) having
an inner circumferential surface;
a generator stator (13) mounted on the inner circumferential surface of the body;
a flywheel (14) mounted in the body (11) and having
an extension portion (141), wherein an end of the extension portion (141) extends out of the body (11); and
a disk (142) mounted in the body (11) and having
an outer peripheral surface spaced from the generator stator (13); and
a through recess (144) axially formed in a center of the disk (142);
a generator rotor (15) mounted around the outer peripheral surface and spaced from the generator stator (13); and
a transmission assembly (18) mounted in the through recess (144) of the flywheel (14), mounted through the body (11), and having
a unidirectional bearing (181) mounted in the through recess (144) of the flywheel (14) and located in the disk (142);
a connecting shaft (182) mounted in the unidirectional bearing (181) and the extension portion (141) of the flywheel (14);
a transmission shaft (183) mounted in the body (11) and axially spaced from the connecting shaft (182); and
a clutch (184) mounted on the connecting shaft (182) and the transmission shaft (183) and having
a first half portion (185) mounted on and around the connecting shaft (182);
a second half portion (186) mounted on and around a first end of the transmission shaft (183); and
an adjustment block (187) mounted on the transmission shaft (183) and being movable in an axial direction of the transmission shaft (183);
a first motor (20) fixed with the transmission shaft (183) of the transmission assembly (18) of the operating module (10); and
a second motor (30) fixed with the extension portion (141) of the flywheel (14).

2. The electricity generation device as claimed in claim 1, wherein
the first motor (20) has
an input stator (21) having an outer peripheral surface, the outer peripheral surface of the input stator (21) fixed on an inner peripheral surface of the body (11); and
an input rotor (22) mounted around and fixed with the transmission shaft (183).

3. The electricity generation device as claimed in claim 2, wherein
the second motor (30) has
an output stator (31) having an outer peripheral surface, the outer peripheral surface of the output stator (31) fixed on the inner peripheral surface of the body (11); and
an output rotor (32) mounted around and fixed with the extension portion (141) of the flywheel (14).

4. The electricity generation device as claimed in claim 3, wherein
the body (11) has
a first face (111);
a second face (112);
a first mounting recess (113) axially formed in the first face (111) of the body (11) and having an inner surface;
a first mounting hole (114) axially formed through the inner surface of the first mounting recess (113);
a second mounting recess (115) axially formed in the second face (112) of the body (11), aligned with the first mounting recess (113), and having an inner surface; and
a second mounting hole (116) axially formed through the inner surface of the second mounting recess (115) and aligned with the first mounting hole (114);
the operating module (10) further has
a first bearing (12) mounted in the second mounting hole (116); and
a second bearing (16) mounted in the first mounting hole (114);
the connecting shaft (182) has
a first end mounted in the extension portion (141); and
a second end extending out of the through recess (144) of the flywheel (14) ; and
the transmission shaft (183) has
the first end located in the body (11);and
a second end extending out of the first mounting recess (113) of the body (11).

5. The electricity generation device as claimed in any one of claims 1 to 4, wherein the generator stator (13) is a coil, and the generator rotor (15) is a magnet.

6. The electricity generation device as claimed in any one of claims 1 to 4, wherein the generator stator (13) is a magnet, and the generator rotor (15) is a coil.

## Patentansprüche

1. Eine Elektrizitätserzeugungsvorrichtung, **dadurch gekennzeichnet, dass** die Elektrizitätserzeugungsvorrichtung umfasst:
ein Betriebsmodul (10), umfassend:
einen Körper (11), umfassend:
eine Innenumfangsfläche,
einen Generator-Stator (13), der an der Innenumfangsfläche des Körpers montiert ist,
ein Schwungrad (14), das in dem Körper (11) montiert ist und umfasst:
einen Erweiterungsabschnitt (141), wobei sich ein Ende des Erweiterungsabschnitts (141) aus dem Körper (11) heraus erstreckt, und
eine Scheibe (142), die in dem Körper (11) montiert ist und umfasst:
eine Außenumfangsfläche, die im Abstand von dem Generator-Stator (13) angeordnet ist, und
eine Durchgangsaussparung (144), die axial in einer Mitte der Scheibe (142) ausgebildet ist,
einen Generator-Rotor (15), der um die Außenumfangsfläche herum montiert ist und im Abstand von dem Generator-Stator (13) angeordnet ist, und
eine Übertragungsanordnung (18), die in der Durchgangsaussparung (144) des Schwungrades (14) montiert ist, die durch den Körper (11) hindurch montiert ist und umfasst:
ein unidirektionales Lager (181), das in der Durchgangsaussparung (144) des Schwungrades (14) montiert ist und in der Scheibe (142) angeordnet ist,
eine Verbindungswelle (182), die in dem unidirektionalen Lager (181) und dem Erweiterungsabschnitt (141) des Schwungrades (14) montiert ist,
eine Übertragungswelle (183), die in dem Körper (11) montiert ist und axial im Abstand von der Verbindungswelle (182) angeordnet ist, und
eine Kupplung (184), die an der Verbindungswelle (182) und der Übertragungswelle (183) montiert ist und umfasst:
einen ersten Hälftenabschnitt (185), der an und um die Verbindungswelle (182) herum montiert ist,
einen zweiten Hälftenabschnitt (186), der an und um ein erstes Ende der Übertragungswelle (183) herum montiert ist, und
einen Einstellblock (187), der an der Übertragungswelle (183) montiert ist und in einer Axialrichtung der Übertragungswelle (183) bewegbar ist,
einen ersten Motor (20), der fest mit der Übertragungswelle (183) der Übertragungsanordnung (18) des Betriebsmoduls (10) verbunden ist, und
einen zweiten Motor (30), der fest mit dem Erweiterungsabschnitt (141) des Schwungrades (14) verbunden ist.

2. Die Elektrizitätserzeugungsvorrichtung nach Anspruch 1, wobei
der erste Motor (20) umfasst:
einen Eingangsstator (21), der eine Außenumfangsfläche umfasst, wobei die Außenumfangsfläche des Eingangsstators (21) an einer Innenumfangsfläche des Körpers (11) befestigt ist, und
einen Eingangsrotor (22), der um die Übertragungswelle (183) herum montiert und fest mit dieser verbunden ist.

3. Die Elektrizitätserzeugungsvorrichtung nach Anspruch 2, wobei
der zweite Motor (30) umfasst:
einen Ausgangsstator (31), der eine Außenumfangsfläche umfasst, wobei die Außenumfangsfläche des Ausgangsstators (31) an der Innenumfangsfläche des Körpers (11) befestigt ist, und
einen Ausgangsrotor (32), der um den Erweiterungsabschnitt (141) des Schwungrades (14) herum montiert und fest mit diesem verbunden ist.

4. Die Elektrizitätserzeugungsvorrichtung nach Anspruch 3, wobei
der Körper (11) umfasst:
eine erste Fläche (111),
eine zweite Fläche (112),
eine erste Montageaussparung (113), die axial in der ersten Fläche (111) des Körpers (11) ausgebildet ist und eine Innenfläche umfasst,
ein erstes Montageloch (114), das axial durch die Innenfläche der ersten Montageaussparung (113) hindurch ausgebildet ist,
eine zweite Montageaussparung (115), die axial in der zweiten Fläche (112) des Körpers (11) ausgebildet ist, zu der ersten Montageaussparung (113) ausgerichtet ist und eine Innenfläche umfasst, und
ein zweites Montageloch (116), das axial durch die Innenfläche der zweiten Montageaussparung (115) hindurch ausgebildet ist und zu dem ersten Montageloch (114) ausgerichtet ist,
das Betriebsmodul (10) ferner umfasst:
ein erstes Lager (12), das in dem zweiten Montageloch (116) montiert ist, und
ein zweites Lager (16), das in dem ersten Montageloch (114) montiert ist,
die Verbindungswelle (182) umfasst:
ein erstes Ende, das in dem Erweiterungsabschnitt (141) montiert ist, und
ein zweites Ende, das sich aus der Durchgangsaussparung (144) des Schwungrades (14) heraus erstreckt, und
die Übertragungswelle (183) umfasst:
das erste Ende, das in dem Körper (11) angeordnet ist, und
ein zweites Ende, das sich aus der ersten Montageaussparung (113) des Körpers (11) heraus erstreckt.

5. Die Elektrizitätserzeugungsvorrichtung nach einem der Ansprüche 1-4, wobei der Generator-Stator (13) eine Spule ist und der Generator-Rotor (15) ein Magnet ist.

6. Die Elektrizitätserzeugungsvorrichtung nach einem der Ansprüche 1-4, wobei der Generator-Stator (13) ein Magnet ist und der Generator-Rotor (15) eine Spule ist.

## Revendications

1. Dispositif de production d'électricité, **caractérisé en ce que** le dispositif de production d'électricité comprend :
un module d'opération (10) comprenant :
un corps (11) comprenant
une surface circonférentielle interne ;
un stator de générateur (13) monté sur la surface circonférentielle interne du corps ;
un volant d'inertie (14) monté dans le corps (11) et comprenant
une portion d'extension (141), une extrémité de la portion d'extension (141) s'étendant hors du corps (11) ; et
un disque (142) monté dans le corps (11) et comprenant
une surface périphérique externe espacée du stator de générateur (13) ; et
un évidement traversant (144) formé axialement dans un centre du disque (142) ;
un rotor de générateur (15) monté autour de la surface périphérique externe et espacé du stator de générateur (13) ; et
un ensemble de transmission (18) monté dans l'évidement traversant (144) du volant d'inertie (14) monté à travers le corps (11) et comprenant
un palier unidirectionnel (181) monté dans l'évidement traversant (144) du volant d'inertie (14) et situé dans le disque (142) ;
un arbre de liaison (182) monté dans le palier unidirectionnel (181) et la portion d'extension (141) du volant d'inertie (14) ;
un arbre de transmission (183) monté dans le corps (11) et espacé axialement de l'arbre de liaison (182) ; et
un embrayage (184) monté sur l'arbre de liaison (182) et l'arbre de transmission (183) et comprenant
une première moitié (185) montée sur et autour de l'arbre de liaison (182) ;
une deuxième moitié (186) montée sur et autour d'une première extrémité de l'arbre de transmission (183) ; et
un bloc d'ajustement (187) monté sur l'arbre de transmission (183) et mobile dans une direction axiale de l'arbre de transmission (183) ;
un premier moteur (20) fixé avec l'arbre de transmission (183) de l'ensemble de transmission (18) du module d'opération (10) ; et
un deuxième moteur (30) fixé avec la portion d'extension (141) du volant d'inertie (14).

2. Dispositif de production d'électricité selon la revendication 1, dans lequel le premier moteur (20) comprend
un stator d'entrée (21) comprenant une surface périphérique externe, la surface périphérique externe du stator d'entrée (21) étant fixée sur une surface périphérique interne du corps (11) ; et
un rotor d'entrée (22) monté autour et fixé avec l'arbre de transmission (183).

3. Dispositif de production d'électricité selon la revendication 2, dans lequel le deuxième moteur (30) comprend
un stator de sortie (31) comprenant une surface périphérique externe, la surface périphérique externe du stator de sortie (31) étant fixée sur la surface périphérique interne du corps (11) ; et
un rotor de sortie (32) monté autour et fixé avec la portion d'extension (141) du volant d'inertie (14).

4. Dispositif de production d'électricité selon la revendication 3, dans lequel le corps (11) comprend
une première face (111) ;
une deuxième face (112) ;
un premier évidement de montage (113) formé axialement dans la première face (111) du corps (11) et comprenant une surface interne ;
un premier trou de montage (114) formé axialement à travers la surface interne du premier évidement de montage (113) ;
un deuxième évidement de montage (115) formé axialement dans la deuxième face (112) du corps (11), aligné avec le premier évidement de montage (113) et comprenant une surface interne ; et
un deuxième trou de montage (116) formé axialement à travers la surface interne du deuxième évidement de montage (115) et aligné avec le premier trou de montage (114) ;
le module d'opération (10) comprend en outre
un premier palier (12) monté dans le deuxième trou de montage (116) ; et
un deuxième palier (16) monté dans le premier trou de montage (114) ;
l'arbre de liaison (182) comprend
une première extrémité montée dans la portion d'extension (141) ; et
une deuxième extrémité s'étendant hors de l'évidement traversant (144) du volant d'inertie (14) ; et
l'arbre de transmission (183) comprend
la première extrémité située dans le corps (11) ; et
une deuxième extrémité s'étendant hors du premier évidement de montage (113) du corps (11).

5. Dispositif de production d'électricité selon l'une des revendications 1 à 4, dans lequel le stator de générateur (13) est une bobine et le rotor de générateur (15) est un aimant.

6. Dispositif de production d'électricité selon l'une des revendications 1 à 4, dans lequel le stator de générateur (13) est un aimant et le rotor de générateur (15) est une bobine.
